(19) Europäisches Patentamt
European Patent Office
Office européen des brevets

(11) **EP 3 217 104 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(51) Int Cl.:
*F24D 19/10* (2006.01)    *G05D 23/19* (2006.01)
*G01K 17/08* (2006.01)

(21) Anmeldenummer: **17158603.5**

(22) Anmeldetag: **01.03.2017**

(54) **VORRICHTUNG UND VERFAHREN ZUR ERMITTLUNG DES BETRIEBSZUSTANDS EINES HEIZKÖRPERS MIT EINEM HEIZKÖRPERREGELVENTIL**

APPARATUS AND METHOD FOR DETERMINING THE OPERATING CONDITIONS OF A RADIATOR WITH A RADIATOR VALVE

APPAREIL ET MÉTHODE POUR DETERMINER L'ÉTAT DE FONCTIONNEMENT D'UN RADIATEUR AVEC UN ROBINET THERMOSTATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2016 DE 102016104204**

(43) Veröffentlichungstag der Anmeldung:
**13.09.2017 Patentblatt 2017/37**

(73) Patentinhaber: **Techem Energy Services GmbH 65760 Eschborn (DE)**

(72) Erfinder:
• **Kähler, Arne**
**61350 Bad Homburg (DE)**
• **Wurl, Andreas**
**61462 Königstein (DE)**

(74) Vertreter: **Keil & Schaafhausen Patent- und Rechtsanwälte PartGmbB Friedrichstraße 2-6 60323 Frankfurt am Main (DE)**

(56) Entgegenhaltungen:
EP-A1- 0 189 614    EP-A1- 1 645 928
EP-A1- 2 009 536    EP-A2- 1 936 288
EP-A2- 2 420 748

EP 3 217 104 B1

## Beschreibung

Die Erfindung betrifft ein Verfahren und eine Vorrichtung zur Ermittlung des Betriebszustands eines Heizkörpers mit einem Heizkörperregelventil nach dem Oberbegriff der Ansprüche 1 und 10..

Derartige Heizkörper sind meist in Heizungssystemen eingebaut, in denen die Heizkörper über einen Vorlauf mit einem Wärmeträgermedium versorgt werden, dass unter einen bestimmten Druck und mit einem bestimmte Massestrom über dem Vorlauf zu dem Heizkörper strömen und nach Abgabe einer bestimmten Wärmemenge durch einen Rücklauf der Heizung in der Heizungsanlage wieder zugeführt werden. Insbesondere die Parameter Druck, Massestrom und/oder Vorlauftemperatur des Wärmeträgermediums charakterisieren den Betriebszustand des Heizkörpers.

Da in einer Heizungsanlage meist mehrere Heizkörper an verschiedenen Einbaupositionen betrieben werden, wird bei der Inbetriebnahme ein hydraulischer Abgleich des Systems durchgeführt, der sicherstellen soll, dass an den verschiedenen Heizkörpern ähnliche Betriebszustände vorliegen.

Häufig wird dieser hydraulische Abgleich jedoch nicht korrekt durchgeführt. Auch kann sich ein einmal bei der Installation korrekt eingestellter hydraulischer Abgleich verändern. Dies hat zur Folge, dass der Heizkörper in einem nicht optimalen Betrieb betrieben wird.

Aus der EP 1 936 288 A2 sind ein Verfahren und eine Vorrichtung zur Detektion des hydraulischen Zustands einer Heizungsanlage mit über ein Fluidströmungssystem verbundenen Heizkörpern bekannt, die von einem Heizmedium mit einer Vorlauftemperatur durchströmt werden. Zur Detektion des hydraulischen Abgleichs im laufenden Betrieb ist vorgesehen, dass die Vorlauftemperatur und für jeden Heizkörper eine aus einer Differenz einer heizkörperseitigen und raumluftseitigen Temperatur abgeleitete Übertemperatur zu verschiedenen Zeitpunkten gemessen und daraus eine den Wärmebedarf des Heizkörpers anzeigende Kenngröße ermittelt wird. Die Veränderung der Kenngröße über der Zeit oder der Vorlauftemperatur und die zeitliche Veränderung der Vorlauftemperatur werden ausgewertet, um den hydraulischen Zustand des Heizkörpers zu ermitteln.

In der EP 1 645 928 A1 wird ein Verfahren beschrieben, bei dem der Versorgungszustand einer Heizfläche aus Heizflächentemperaturwerten und/oder aus Volumenstromwerten mittels Kennlinien ermittelt wird. Die Umgebungstemperatur der Heizfläche wird bei der Ermittlung des Versorgungszustandes der Heizfläche berücksichtigt. Auf Grundlage dieser Ermittlung des Versorgungszustands kann ein Versorgungszustandsregler den Versorgungszustand einer Heizfläche unter Durchführung des vorstehenden Verfahrens auf einen gewünschten Wert einregeln.

Die EP 2 420 748 A2 beschreibt ein System und ein Verfahren zur Durchführung eines hydraulischen Abgleichs in einem Heizungssystem mit wenigstens zwei Heizflächen, wobei der Massenstrom eines Heizfluids durch jede der Heizflächen an jeder der Heizflächen mittels eines elektronischen Thermostatventils individuell durch Einstellung der aktuellen Öffnungsposition des Thermostatventils geregelt wird. Für jede der Heizflächen wird aus Temperaturmesswerten ein den Arbeitspunkt der Heizfläche repräsentierender Wert bestimmt und mit einem gespeicherten Vergleichswert der Heizfläche verglichen. In Abhängigkeit des Vergleichs wird die maximal zulässige Öffnungsposition des Thermostatventil elektronisch begrenzt, bei dem in einem Fall, wenn der Vergleich eine hydraulische Überversorgung der Heizfläche anzeigt, die aktuelle Öffnungsposition des Thermostatventils um einen Reduktionswert insbesondere mehrfach reduziert wird, bis dass der Vergleich ein Ergebnis liefert, gemäß dem eine weitere Reduktion unnötig ist. Der Wert der letzten Öffnungsposition als maximal zulässige Öffnungsposition zusammen mit der gemessenen Übertemperatur der Heizfläche zur Bildung und/oder Adaption einer Kennlinie / eines Kennfeldes gespeichert wird. Dies iterative Bestimmung des Heizkörper-Arbeitspunkts ist allerdings aufwendig.

Aufgabe der Erfindung ist es daher, den Betriebszustand des Heizkörpers mit dem Heizkörperregelventil auf einfache Weise zu ermitteln.

Diese Aufgabe wird mit den Merkmalen der Ansprüche 1 und 10 gelöst. Bei dem erfindungsgemäß vorgeschlagenen Verfahren werden bei dem an Zeitpunkten $\Delta t$ der Ventilhub $h$ des Heizkörperregelventils und die durch den Heizkörper abgegebene Wärmemenge $\Delta Q$ erfasst. Daraus wird eine Wärmeleistungscharakteristik erstellt, indem die zu verschiedenen Zeitpunkten abgegebene Wärmemenge als Funktion des Ventilhubs beschrieben wird. Ferner wird durch vorgeschlagene Verfahren die erstellte Wärmeleistungscharakteristik mit einer Sollcharakteristik verglichen, wobei aus dem Vergleichsergebnis der Betriebszustand des Heizkörpers mit dem Heizkörperregelventil abgeleitet wird.

In einer einfachen Ausführungsform kann der Vergleich anhand einer graphischen, insbesondere zweidimensionalen Darstellung der Sollcharakteristik und der aus den erfassten Größen abgeleiteten Wärmeleistungscharakteristik erfolgen, wobei ein bestimmungsgemäßer Betriebszustand dann angenommen wird, wenn Datenpunkte der Sollcharakteristik und Datenpunkte der Wärmeleistungscharakteristik in sich überschneidenden Bereichen der graphischen Darstellung erfolgen.

Diese Datenpunkt-Bereiche der Sollcharakteristik und der Wärmeleistungscharakteristik können für das Erzeugen des Vergleichsergebnisses bspw. mit einer Bildverarbeitungssoftware charakterisiert und ihre Schnittmenge ermittelt werden. Aus dem Vergleichsergebnis kann ein bestimmungsgemäßer Betriebszustand bspw. dann abgeleitet werden, wenn die flächenmäßige Größe der Schnittmenge einen vorgegebenen prozentualen Anteil der flächenmäßigen Größe der Datenpunkt-Bereiche der Sollcharakteristik und/oder der Wärmeleistungscharakteristik ausmacht. Es sind auch andere statistische Auswertungen möglich, wie bspw. eine systematische Verschiebung von Sollcharakteristik und Wärmeleistungscharakteristik. Hierzu können zum Beispiel Flächenschwerpunkte oder anzahlgewichtete Flächenschwerpunkte der jeweiligen Datenpunkt-Bereiche bestimmt und deren Abstand über eine Abstandfunktion bewertet werden. Eine andere einfache statistische Auswertemöglichkeit kann darin liegen, die innerhalb und außerhalb der Sollcharakteristik liegenden erfassten Datenpunkte separat zu zählen und das Vergleichsergebnis aus einem Verhältnis der Anzahlen zu ermitteln. Die Erfindung ist aber nicht auf die konkreten Beispiele beschränkt, auch wenn diese besonders bevorzugte Auswertungsmöglichkeiten darstellen.

Erfindungsgemäß wird die Wärmeleistungscharakteristik also dadurch gebildet, dass die abgegebene Wärmemenge $\Delta Q$ als eine Funktion des Ventilhubs $h$ sowie ggf. weiterer Größen, insbesondere der Vorlauftemperatur $\vartheta_{VL}$ und/oder der Raumtemperatur $\vartheta_{Raum}$, dargestellt wird:

$$\Delta Q = f(h)$$
$$\Delta Q = f(h, \vartheta_{VL}) \qquad\qquad (1)$$
$$\Delta Q = f(h, \vartheta_{RL}, \vartheta_{Raum})$$

Erfindungsgemäß betrifft die Bewertung des Betriebszustands des Heizkörpers mit dem Heizkörperregelventil insbesondere den hydraulischen Zustand des Heizkörpers, der die Versorgung des Heizkörpers mit einem ausreichenden Massestrom m oder Volumenstrom $\dot{V}$ des Wärmeträgermediums beschreibt.

Vorzugsweise kann die Sollcharakteristik aus einem Arbeitspunktbereich für den Heizkörper abgeleitet werden. So definiert der gewünschte Arbeitspunktbereich das Aussehen und die Definition der Sollcharakteristik.

Gemäß einer bevorzugten Realisation des Verfahrens kann der Arbeitspunktbereich durch zulässige (vorzugsweise theoretisch bestimmte) Arbeitspunkte für den Heizkörper definiert werden, die durch einen für ein vollständig geöffnetes Heizkörperregelventil, d.h. den Ventilhub $h = 1$, vorgegeben Soll-Differenzdruck $\Delta p$ über dem Heizkörperregelventil charakterisiert werden.

Daraus lässt sich über die Gleichung

$$\dot{V} = \frac{\Delta V}{\Delta t} = K_V(h) \cdot \sqrt{\Delta p} \; , \qquad\qquad (2)$$

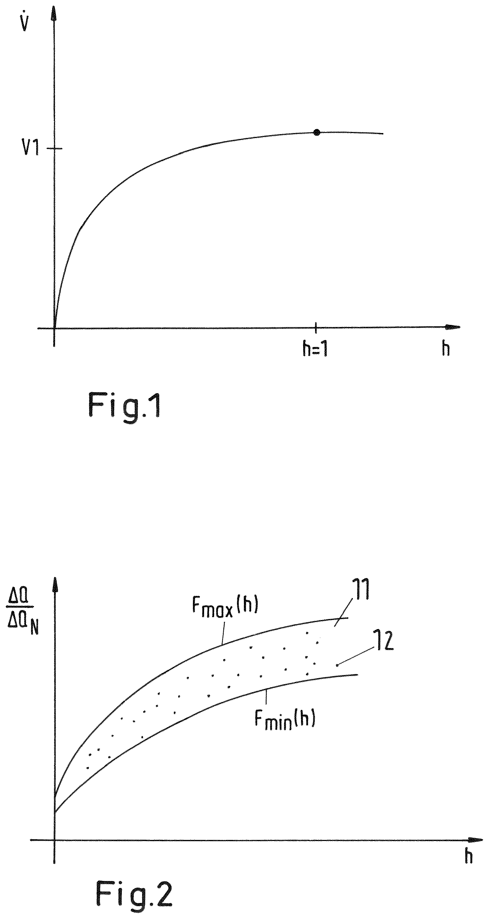

bei bekannter Betriebskennlinie des Heizkörperregelventils, wie sie beispielhaft in Fig. 1 dargestellt ist, ein bestimmter Volumenstrom V bzw. Massestrom $\dot{m} = \rho \cdot \dot{V}$ ableiten, der bei einer vorgegebenen Vorlauftemperatur $\vartheta_{VL}$ zu einer ggf. empirisch oder aus der Nenn-Wärmeleistung $\Delta Q_N$ des Heizkörpers abgeleiteten Rücklauftemperatur $\vartheta_{RL}$ führt.

Hieraus kann dann über die Beziehung

$$\Delta Q = \Delta Q(\Delta t) = \rho \cdot c \cdot \Delta V \cdot (\vartheta_{VL} - \vartheta_{RL}) \qquad\qquad (3)$$

eine (theoretisch) abzugebende Sollwärmemenge $\Delta Q$ für die aktuelle Hubposition ermittelt werden.

Für jede Vorlauftemperatur $\vartheta_{VL}$ kann so eine Sollcharakteristik abgeleitet werden, die die abzugebende Sollwärmemenge $\Delta Q$ in Abhängigkeit von dem Ventilhub $h$ des Heizkörperregelventils anzeigt. Wenn der Solldifferenzdruck $\Delta p$ über dem Heizkörperregelventil als zulässige Druckspanne definiert wird, ergibt sich für jeden Ventilhub $h$ eine zulässige Spanne für die abzugebende Sollwärmemenge $\Delta Q$. Dies ist in Fig. 2 graphisch dargestellt.

Dies kann in gleicher Weise erreicht werden, wenn der Arbeitspunktbereich durch zulässige Arbeitspunkte für den Heizkörper definiert wird, die gleich durch einen vorgegebenen Sollvolumenstrom bzw. Sollmassestrom durch das Heizkörperregelventil vorgegeben werden.

Dieser kann direkt in Gleichung (3) eingesetzt werden. Wenn der Sollvolumenstrom bzw. Sollmassestrom als Strombereich vorgegeben wird, ergibt sich für jeden Ventilhub eine zulässige Spanne für die abzugebende Sollwärmemenge, wie in gleicher Weise durch Fig. 2 graphisch veranschaulicht.

Erfindungsgemäß wird die Sollcharakteristik durch einhüllende Funktionen beschrieben, wobei eine erste einhüllende Funktion $F_{min}$ die untere Grenze der abzugebenden Wärmemenge $\Delta Q$ in Abhängigkeit des Ventilhubs (h) und eine zweite einhüllende Funktion $F_{max}$ die obere Grenze der abzugehenden Wärmemenge $\Delta Q$ beschreibt.

Diese einhüllenden Funktionen $F_{min}$, $F_{max}$ können analytisch bspw. aus den Gleichungen (2) und/oder (3) abgeleitet oder durch eine Anpassung (Fit) an empirisch oder theoretisch erzeugte Datenpunkte ($\Delta Q, h$) erzeugt werden. Für die Anpassung an die Datenpunkte ($\Delta Q, h$) kann bspw. eine Polynomfunktion verwendet werden. Dieses Vorgehen ist dem Fachmann bekannt und muss hier nicht weiter beschrieben werden.

Mit diesen einhüllenden Funktionen $F_{min}$, $F_{max}$ wird für jeden Datenpunkt $(\Delta Q,h)$ entschieden, ob er innerhalb oder außerhalb der Sollcharakteristik liegt. Hierfür ist einfach zu entscheiden, ob die Beziehung

$$F_{\min}(h) < \Delta Q(h) < F_{\max}(h)$$

eingehalten wird, da die einhüllenden Funktionen $F_{min}$, $F_{max}$ die Grenzwerte für die abzugebende Wärmemenge $\Delta Q$ vorgeben. Abhängig davon kann dann das Vergleichsergebnis in der bereits beschrieben Weise vorgenommen werden, wobei sowohl eine Entscheidung für jeden einzelnen Datenpunkt $(\Delta Q,h)$ oder eine statistische Entscheidung für eine Vielzahl von Datenpunkten $(\Delta Q,h)$ möglich ist.

In einer besonders einfachen gerätetechnischen Umsetzung kann vorgesehen werden, dass ein Heizkostenverteiler und/oder eine dem Heizkörper zugeordnete Temperaturregelung, bspw. eine Einzelraumtemperaturregelung, für die Erfassung der abgegebenen Wärmemenge $\Delta Q$ und des Ventilhubs $h$ verwendet werden.

2-Fühler-Heizkostenverteiler messen eine Heizkörperoberflächentemperatur $\vartheta_{HK}$ und eine Raumtemperatur $\vartheta_{Raum}$ und berechnen hieraus eine logarithmische Übertemperatur $\Delta\log$

$$\Delta \log = k_{ges} \cdot (\vartheta_{HK} - \vartheta_{Raum}), \tag{4}$$

wobei $k_{ges}$ ein Faktor ist, der den Wärmeübergang zwischen dem Heizkörper und der Luft auf die jeweiligen Temperaturfühler berücksichtigt. Dieser Faktor $k_{ges}$ ist für den verwendeten Heizköper bekannt. Die 2-Fühler-Heizkostenverteiler sind in der Praxis am weitesten verbreitet.

Ferner gibt es 3-Fühler-Heizkostenverteiler, die eine Vorlauftemperatur $\vartheta_{VL}$ des Wärmeträgermediums, eine Rücklauftemperatur $\vartheta_{RL}$ des Wärmeträgermediums und eine Raumtemperatur $\vartheta_{Raum}$ messen und hieraus eine logarithmische Übertemperatur $\Delta\log$

$$\Delta \log = \frac{\vartheta_{VL} - \vartheta_{RL}}{\ln\left(\dfrac{\vartheta_{VL} - \vartheta_{Raum}}{\vartheta_{RL} - \vartheta_{Raum}}\right)} \tag{5}$$

berechnen.

Die abgegebene Wärmeleistung $\Delta Q$ pro Zeiteinheit $\Delta t$ ergibt sich unter Verwendung der logarithmische Übertemperatur $\Delta\log$ aus

$$\Delta Q = \Delta Q_N \cdot \left(\frac{\Delta \log}{\Delta \log_N}\right)^n, \tag{6}$$

wobei $\Delta\log_N$ die logarithmische Übertemperatur bei Nennmassestrom $\Delta Q_N$, die Nennleistung des Heizköpers und $n$ der Heizkörperexponent sind. Diese Größen hängen von dem jeweils verwendeten Heizkörper ab und werden durch die Heizköperhersteller bekannt gegeben.

Für die Sollcharakteristik und die Wärmeleistungscharakteristik kann die abgegebene Wärmemenge $\Delta Q$ bspw. als das Verhältnis (normierte Wärmemenge)

$$\Delta Q / \Delta Q_n$$

dargestellt werden und sich aus der logarithmischen Übertemperatur $\Delta\log$ und der logarithmischen Übertemperatur $\Delta\log_N$ bei Nennmassestrom ergeben.

Letztere ist eine feststehende Größe, die bspw. als $\Delta Q_N$ = 59,44 K definiert sein kann.

Die abgegebene Wärmemenge $\Delta Q$ kann erfindungsgemäß aber auch durch ein beliebiges anderes Messgerät und -verfahren bestimmt werden und bspw. ins Verhältnis mit der Wärmemengenabgabe $\dot{Q}_N$ des Heizkörpers bei Nennmassestrom gesetzt werden, die für jeden Heizkörper aus den Herstellerangaben bekannt ist.

Der Heizkostenverteiler und/oder die Temperaturregelung können auch zur Erfassung der weiteren Größen verwendet werden, d.h. insbesondere der Vorlauftemperatur $\vartheta_{VL}$, der Rücklauftemperatur $\vartheta_{RL}$ der Heizkörperoberflä-

chentemperatur $\vartheta_{HK}$ und/oder der Raumtemperatur $\vartheta_{Raum}$.

In diesem Fall ist es erfindungsgemäß besonders bevorzugt, wenn anstelle der Wärmeleistungscharakteristik und/oder der Sollcharakteristik eine Vorlauftemperatur-korrigierte Wärmeleistungscharakteristik und/oder der Vorlauftemperaturkorrigierte Sollcharakteristik erzeugt wird. Hierdurch wird erreicht, dass für verschiedene Vorlauftemperaturen $\vartheta_{VL}$ nicht jeweils eigene Wärmeleistungscharakteristiken und/oder der Sollcharakteristiken verwendet werden, weil die Vorlauftemperaturabhängig in diesen Charakteristiken bspw. durch eine Parametrierung berücksichtigt wurde.

Wenn auch die Raumtemperatur $\vartheta_{Raum}$ zur Verfügung steht, ist es vorteilhaft, anstelle der Vorlauftemperatur $\vartheta_{VL}$ und/oder der Rücklauftemperatur $\vartheta_{RL}$ die jeweils durch Differenzbildung mit der Raumtemperatur gebildeten Übertemperaturen zu verwenden, weil diese die Wärmemengenabgabe des Heizkörpers in den Raum am besten beschreiben.

In einer Variante des vorgeschlagenen Verfahrens kann vorgesehen werden, dass der Heizkostenverteiler die abgegebene Wärmemenge $\Delta Q$, die Vorlauftemperatur $\vartheta_{VL}$, die Rücklauftemperatur $\vartheta_{RL}$, die Heizkörperoberflächentemperatur $\vartheta_{HK}$ und/oder die Raumtemperatur $\vartheta_{Raum}$ an eine Auswerte-Recheneinheit zur Durchführung des Verfahrens übermittelt.

Zusätzlich oder alternativ kann auch vorgesehen sein, dass die Raumtemperaturregelung (5) die Vorlauftemperatur $\vartheta_{VL}$, Raumtemperatur $\vartheta_{Raum}$ und/oder den Ventilhub ($h$) an eine Auswerte-Recheneinheit (8) zur Durchführung des Verfahrens übermittelt.

Um eine einfache Einbindung in bestehende Installationen zu erreichen, kann erfindungsgemäß vorgesehen sein, dass die Übermittlung der abgegebenen Wärmemenge $\Delta Q$, der Vorlauftemperatur $\vartheta_{VL}$, der Rücklauftemperatur $\vartheta_{RL}$, der Heizkörperoberflächentemperatur $\vartheta_{HK}$, der Raumtemperatur $\vartheta_{Raum}$ und/oder des Ventilhubs $h$ an die Auswerte-Recheneinheit durch eine synchrone Drahtloskommunikation erfolgt.

Erfindungsgemäß kann als Auswerte-Recheneinheit für die Durchführung des Verfahrens die Recheneinheit eines Heizkostenverteilers, einer Temperaturregelung oder einer separaten Vorrichtung verwendet werden. Hierdurch wird auf Ressourcen der bestehenden Installationen zurückgegriffen.

Die Erfindung bezieht sich ferner auf eine Vorrichtung zur Ermittlung des Betriebszustands eines Heizkörpers mit einem Heizkörperregelventil und mit einer Recheneinheit, welche dazu eingerichtet ist, die an einem Heizkörper mit Heizkörperregelventil erfassten Messgrößen Ventilhub $h$ und durch den Heizkörper abgegebene Wärmemenge $\Delta Q$ und/oder Vorlauftemperatur $\vartheta_{VL}$, Rücklauftemperatur ($\vartheta_{RL}$), die Heizkörperoberflächentemperatur ($\vartheta_{HK}$) und/oder die Raumtemperatur ($\vartheta_{Raum}$) zu empfangen. Die Recheneinheit ist erfindungsgemäß zur Durchführung des vorbeschriebenen Verfahrens oder Teilen hiervon eingerichtet. Die erfindungsgemäße Vorrichtung kann insbesondere Teil eines Heizkostenverteilers, einer Raumtemperaturregelung oder eines Datensammler sein.

Weitere Vorteile, Merkmale und Anwendungsmöglichkeiten der vorliegenden Erfindung ergeben sich auch aus der nachfolgenden Beschreibung eines Ausführungsbeispiels und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1    schematisch die Betriebskennlinie eines Heizkörperregelventils, welche für einen Ventilhub $h$ den durch das Heizkörperregelventil fließenden Volumenstrom $\dot{V}$ anzeigt;

Fig.2    schematisch eine Sollcharakteristik für die durch den Heizkörper abgeigebene Wärmeleistung $\Delta Q$;

Fig.3    schematisch eine erfindungsgemäße Vorrichtung zur Durchführung des Verfahrens zur Ermittlung des Betriebszustands eines Heizkörpers gemäß einer bevorzugten Ausführungsform; und

Fig. 4    eine graphische Darstellung der Sollcharakteristik und der aus erfassten Größen der Vorrichtung gemäß Fig. 3 abgeleiteten Wärmeleistungscharakteristik.

Die in Fig. 1 dargestellte Kennlinie korreliert bei vollständig geöffnetem Heizkörperregelventil in der Ventilhubstellung $h = 1$ insbesondere für einen über das Heizkörperregelventil abfallenden Differenzdruck $\Delta p$ den durch das Heizkörperregelventil fließenden Volumenstrom $\dot{V}$ in Abhängigkeit von dem Ventilhub $h$. Diese Kennlinie kann in der beschriebenen Weise verwendet werden, um eine von dem Heizkörper abzugebende Wärmemenge $\Delta Q$ bei der Erstellung einer Sollcharakteristik zu ermitteln.

In Fig. 2 ist eine derartige Sollcharakteristik 11 (für eine feste Vorlauftemperatur $\vartheta_{VL}$) als Verhältnis der abgegebenen Wärmemenge $\Delta Q$ zu einer abgegebenen Wärmemenge $\Delta Q_N$ des Heizkörpers bei Nennmassenstrom in Abhängigkeit des Ventilhubs $h$ dargestellt, wobei sich die Breite des Sollbereichs aus einem Soll-Massestrombereich des Wärmeträgermediums ergibt. Die Grenzen des die Sollcharakteristik definierenden Bereichs sind durch einhüllende Funktionen $F_{min}(h)$ und $F_{max}(h)$ definiert. Die in den Sollcharakteristik-Bereich eingezeichneten Punkte stellen beispielhaft berechnete Datenpunkte im Sinne von Arbeitspunkten 12 der Sollcharakteristik 11 dar.

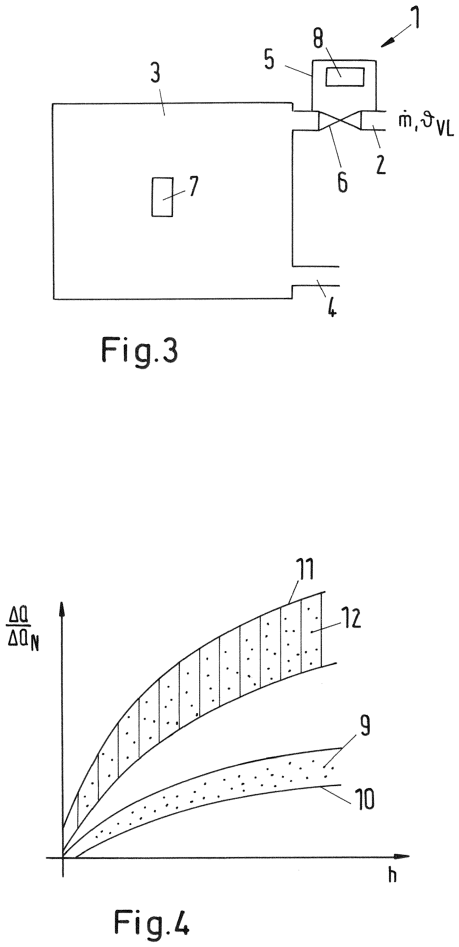

Mit Bezug auf Fig. 3 wird nachstehend eine bevorzugte Ausführungsform der erfindungsgemäßen Vorrichtung beschrieben, die zur Durchführung des Verfahrens zur Ermittlung des Betriebszustands eines Heizkörpers mit Heizkörperregelventil eingerichtet ist.

Eine erfindungsgemäße Vorrichtung 1, die an dem Vorlauf 2 eines Heizkörpers 3 angeordnet ist. Ein nicht dargestelltes Wärmeträgermedium strömt durch den Vorlauf 2 in den Heizkörper 3 und durch den Rücklauf 4 nach Abgabe einer bestimmten Wärmemenge $\Delta Q$ durch den Rücklauf 4 wieder aus dem Heizkörper 3 heraus.

Im Vorlauf 2 fließt das Wärmeträgermedium mit einem Massestrom $\dot{m}$ und einer Vorlauftemperatur $\vartheta_{VL}$. In dem Heizkörper 3 gibt das Wärmeträgermedium dann eine bestimmte Wärmemenge $\Delta Q$ ab und kühlt sich dabei ab, so dass es mit demselben Massestrom $\dot{m}$, aber einer verminderten Rücklauftemperatur $\vartheta_{RL}$ durch den Rücklauf 4 ausfließt.

Die erfindungsgemäße Vorrichtung 1 ist in eine Temperaturregelung 5 integriert, die zur Einstellung der im Raum herrschenden Raumtemperatur $\vartheta_{Raum}$ mit einem Heizkörperregelventil 6 zusammenarbeitet und dessen Ventilhub $h$ entsprechend der gewünschten Raumtemperatur $\vartheta_{Raum}$ und der durch das Wärmeträgermedium angebotenen Vorlauftemperatur $\vartheta_{VL}$ die Raumtemperatur $\vartheta_{Raum}$ einstellt. Dadurch wird der Massestrom m des Wärmeträgermediums durch den Heizkörper 3 begrenzt.

Die abgegebene Wärmemenge $\Delta Q$ des Heizkörpers 3 wird durch einen Heizkostenverteiler 7 ermittelt, der auf der Heizkörperoberfläche montiert ist und die Heizkörperoberflächentemperatur $\vartheta_{HK}$ sowie die Raumtemperatur $\vartheta_{Raum}$ misst. Hieraus berechnet der Heizkostenverteiler 7 in Kenntnis der Wärmemengenabgabe $\Delta Q_N$ des Heizkörpers 3 bei Nennmassestrom die Wärmemengenabgabe $\Delta Q$ und sendet den Quotienten $\Delta Q/\Delta Q_N$ in einer synchronisierten Funkverbindung an die erfindungsgemäße Vorrichtung 1, die in die Temperaturregelung 5 integriert ist und deren Recheneinheit 8 mit verwendet.

In der Recheneinheit 8 wird das übertragenen Verhältnis $\Delta Q/\Delta Q_N$ für die jeweils herrschende Vorlauftemperatur $\vartheta_{VL}$ mit der Ventilhubstellung $h$ korreliert und als Datenpunkt $(\Delta Q, h)$ in die graphische Darstellung der Sollwertcharakteristik als Datenpunkt 9 der Wärmeleistungscharakteristik 10 eingetragen. Dies ist in Fig. 4 für eine Vielzahl von Datenpunkten 9 der Wärmeleistungscharakteristik 10 dargestellt, wobei die Koordinate $\Delta Q$ eines Datenpunkts 9 der Wärmeleistungscharakteristik dem Quotienten $\Delta Q/\Delta Q_N$ entspricht. Entsprechend der Darstellung in Fig. 2 sind auch Arbeitspunkte 12 der Sollcharakteristik 11 mit in Fig. 4 dargestellt.

In dem in Fig. 4 veranschaulichten Beispiel zeigt sich, dass die durch die einzelnen Datenpunkte 9 gebildete Wärmeleistungscharakteristik 10 von der Sollcharakteristik 11 abweicht, was bspw. graphisch durch unterschiedliche Flächenschwerpunkte des Bereichs der Sollcharakteristik 11 und des Bereichs der Wärmeleistungscharakteristik 10 festgestellt werden kann.

Im vorliegenden Fall liegt die abgegebene Wärmeleistung $\Delta Q$ unter der durch die Sollcharakteristik 11 für einen Ventilhub $h$ gewünschten abzugebenden Wärmeleistung $\Delta Q$. Dies deutet darauf hin, dass der Heizkörper 3 nicht mit einem ausreichend hohen Massestrom $\dot{m}$ des Wärmeträgermediums versorgt wird. Mit anderen Worten stimmt der hydraulische Abgleich des Heizkörpers 3 nicht. In diesem Fall kann durch die erfindungsgemäße Vorrichtung 1 eine Fehlermeldung ausgegeben werden.

Die Erfindung ist nicht auf die hier beschriebene Vorrichtung 1 gemäß Fig. 3 beschränkt, sondern umfasst alle Vorrichtungen, welche die eingangs genannten Größen messen oder durch andere Messgeräte übertragen bekommen können und hieraus eine Sollcharakteristik 11 und eine Wärmeleistungscharakteristik 11 bilden. Der beschriebene Beispielfall stellt jedoch insofern eine besonders bevorzugte Lösung dar, als die erfindungsgemäße Vorrichtung 1 in herkömmlicher Weise bereits verwendete Heizkostenverteiler 7 und Raumtemperaturregelungen 5 mit integriert, so dass Anlagen mit entsprechenden Heizkostenverteilern 7 und Raumtemperaturregelungen 5 die erfindungsgemäße Vorrichtung einfach durch entsprechende Einrichtung der Recheneinheit des Heizkostenverteilers 7, der Temperaturregelung 5 oder eines die Daten von beiden Geräten empfangenen Datensammlers erzeugt werden kann.

**Bezugszeichenliste:**

1    Vorrichtung zur Ermittlung des Betriebszustands eines Heizkörpers
2    Vorlauf
3    Heizkörper
4    Rücklauf
5    Temperaturregelung
6    Heizkörperregelventil
7    Heizkostenverteiler
8    Recheneinheit zur Ausführung des Verfahrens
9    Arbeitspunkte der Wärmeleistungscharakteristik
10   Datenpunkt-Bereiche der der Wärmeleistungscharakteristik

11    Datenpunkt-Bereiche der Sollcharakteristik

12    Arbeitspunkte der Sollcharakteristik

**Patentansprüche**

1. Verfahren zur Ermittlung des Betriebszustands eines Heizkörpers (3) mit einem Heizkörperregelventil (6), bei dem an Zeitpunkten $\Delta t$

- der Ventilhub ($h$) des Heizkörperregelventils (6) und
- die durch den Heizkörper (3) abgegebene Wärmemenge ($\Delta Q$)

erfasst werden und daraus eine Wärmeleistungscharakteristik (10) erstellt wird, indem die zu verschiedenen Zeitpunkten ($\Delta t$) abgegebene Wärmemenge ($\Delta Q$) als Funktion des Ventilhubs ($h$) beschrieben wird, und bei dem die erstellte Wärmeleistungscharakteristik (10) mit einer Sollcharakteristik (11) verglichen wird, wobei aus dem Vergleichsergebnis der Betriebszustand des Heizkörpers (3) mit dem Heizkörperregelventil (6) abgeleitet wird, **dadurch gekennzeichnet, dass** die Sollcharakteristik (11) durch eine einhüllende Funktionen ($F_{min}$, $F_{max}$) beschrieben wird, wobei eine erste einhüllende Funktion ($F_{min}$) die untere Grenze der abzugebenden Wärmemenge ($\Delta Q$) in Abhängigkeit des Ventilhubs (h) und eine zweite einhüllende Funktion ($F_{max}$) die obere Grenze der abzugehenden Wärmemenge ($\Delta Q$) beschreibt und dass für jeden Datenpunkt ($\Delta Q$, $h$), der durch die bei einem bestimmten Ventilhub (h) abgegebene Wärmemenge ($\Delta Q$) beschrieben ist, entsprechend der Beziehung

$$F_{\min}(h) < \Delta Q(h) < F_{\max}(h)$$

entschieden wird, ob der Datenpunkt ($\Delta Q$, $h$) innerhalb oder außerhalb der Sollcharakteristik (11) liegt.

2. Verfahren nach Anspruch 1, **dadurch gekennzeichnet, dass** die Sollcharakteristik aus einem Arbeitspunktbereich für den Heizkörper (3) abgeleitet wird.

3. Verfahren nach Anspruch 2, **dadurch gekennzeichnet, dass** der Arbeitspunktbereich durch zulässige Arbeitspunkte (12) für den Heizkörper (3) definiert wird, die durch einen für ein vollständig geöffnetes Heizkörperregelventil vorgegeben Solldifferenzdruck ($\Delta p$) über dem Heizkörperregelventil (6) charakterisiert werden.

4. Verfahren nach Anspruch 2, **dadurch gekennzeichnet, dass** der Arbeitspunktbereich durch zulässige Arbeitspunkte (12) für den Heizkörper (3) definiert wird, die durch einen vorgegebenen Sollvolumenstrom bzw. Sollmassestrom durch das Heizkörperregelventil vorgegeben werden.

5. Verfahren nach einem der vorhergehenden Ansprüche, **dadurch gekennzeichnet, dass** ein Heizkostenverteiler (7) und eine dem Heizkörper (3) zugeordnete Temperaturregelung (5) für die Erfassung der abgegebenen Wärmemenge ( $\Delta Q$) und des Ventilhubs ($h$) verwendet werden.

6. Verfahren nach Anspruch 5, **dadurch gekennzeichnet, dass** der Heizkostenverteiler (7) die abgegebene Wärmemenge ($\Delta Q$) an eine Auswerte-Recheneinheit (8) zur Durchführung des Verfahrens übermittelt.

7. Verfahren nach einem Ansprüche 5 oder 6, **dadurch gekennzeichnet, dass** die Raumtemperaturregelung (5) den Ventilhub ($h$) an eine Auswerte-Recheneinheit zur Durchführung des Verfahrens übermittelt.

8. Verfahren nach einem der Ansprüche 5 bis 7, **dadurch gekennzeichnet, dass** die Übermittlung der abgegebene Wärmemenge ($\Delta Q$) und des Ventilhubs (h) an die Auswerte-Recheneinheit (8) durch eine synchrone Drahtloskommunikation erfolgt.

9. Verfahren nach einem der Ansprüche 5 bis 8, **dadurch gekennzeichnet, dass** als Auswerte-Recheneinheit (8) für die Durchführung des Verfahrens die Recheneinheit (8) des Heizkostenverteilers oder der Temperaturregelung oder einer separaten Vorrichtung verwendet wird.

10. Vorrichtung zur Ermittlung des Betriebszustands eines Heizkörpers (3) mit einem Heizkörperregelventil (6) und mit einer Recheneinheit (8), welche dazu eingerichtet ist, die an einem Heizkörper (3) mit Heizkörperregelventil (6) erfassten Messgrößen Ventilhub (*h*) und durch den Heizkörper abgegebene Wärmemenge ($\Delta Q$)zu empfangen, **dadurch gekennzeichnet, dass** die Recheneinheit (8) zur Durchführung des Verfahrens nach einem der Ansprüche 1 bis 9 eingerichtet ist.

**11.** Vorrichtung nach Anspruch 10, **dadurch gekennzeichnet, dass** die Vorrichtung ein Heizkostenverteiler (7) oder eine Raumtemperaturregelung (5) oder ein Datensammler ist.

**Claims**

**1.** A method for determining the operating state of radiator (3) with a radiator control valve (6), wherein at times $\Delta t$

- the valve stroke (h) of the radiator control valve (6) and
- the quantity of heat ($\Delta Q$) emitted by the radiator (3)

are recorded and used to create a heat output characteristic curve (10) in which the quantity of heat ($\Delta Q$) emitted at different times ($\Delta t$) is described as a function of the valve stroke (h) and in which the heat output characteristic curve (10) produced is compared with a target characteristic curve (11), wherein the operating state of the radiator (3) with the radiator control valve (6) is derived from the result of the comparison, **characterized in that** the target characteristic curve (11) is described by an enveloping function ($F_{\min}$, $F_{\max}$), wherein a first enveloping function ($F_{\min}$) describes the lower threshold of the quantity of heat ($\Delta Q$) to be emitted as a function of the valve stroke (h) and a second enveloping function ($F_{\max}$) describes the upper threshold of the quantity of heat ($\Delta Q$) to be emitted and that for each data point ($\Delta Q$, h) which is described by the quantity of heat ($\Delta Q$) emitted with a particular valve stroke (h), it is decided according to the equation

$$F_{\min}(h) < \Delta Q(h) < F_{\max}(h)$$

whether the data point ($\Delta Q$, h) lies within or outside the target characteristic curve (11).

**2.** The method according to claim 1, **characterized in that** the target characteristic curve is derived from a working point range for the radiator (3).

**3.** The method according to claim 2, **characterized in that** the working point range is defined by permitted working points (12) for the radiator (3) which are **characterized by** a target differential pressure ($\Delta p$) for a completely open radiator control valve via the radiator control valve (6).

**4.** The method according to claim 2, **characterized in that** the working point range is defined by permissible working points (12) for the radiator (3) which are predefined by a predefined target volume flow or target mass flow by the radiator control valve.

**5.** The method according to one of the preceding claims, **characterized in that** a heating cost distributor (7) and a temperature controller (5) assigned to the radiator (3) are used to record the quantity of heat ($\Delta Q$) emitted and the valve stroke (h).

**6.** The method according to claim 5, **characterized in that** the heating cost distributor (7) transfers the quantity of heat ($\Delta Q$) emitted to an evaluating/calculating unit (8) to carry out the method.

**7.** The method according to one of claims 5 or 6, **characterized in that** the room temperature controller (5) transfers the valve stroke (*h*) to an evaluating/calculating unit to carry out the method.

**8.** The method according to one of claims 5 to 7, **characterized in that** the transfer of the quantity of heat ($\Delta Q$) emitted and the valve stroke (h) to the evaluating/ calculating unit (8) takes place via synchronous wireless communication.

**9.** The method according to one of claims 5 to 8, **characterized in that** the calculating unit (8) of the heating cost distributor or the temperature controller or a separate device is used as the evaluating/calculating unit (8) to carry out the method.

**10.** A device for determining the operating state of a radiator (3) with a radiator control valve (6) and a calculating unit (8) which is set up to receive measured variables of the valve stroke (h) and quantity of heat emitted by the radiator ($\Delta Q$) recorded on a radiator (3) with a radiator control valve (6), **characterized in that** the calculating unit (8) is set up to carry out the method according to one of claims 1 to 9.

11. The device according to claim 10, **characterized in that** the device is a heating cost distributor (7) or a room temperature controller (5) or a data collector.

**Revendications**

1. Procédé, destiné à déterminer l'état de fonctionnement d'un radiateur (3) avec un robinet thermostatique de radiateur (6), lors duquel, à des moments $\Delta t$

   - la course de robinet (h) du radiateur (6) et
   - la quantité de chaleur ($\Delta Q$) restituée par le radiateur (3) sont détectées et à partir de ces dernières est établie une caractéristique de puissance thermique (10) en ce que la quantité de chaleur ($\Delta Q$) restituée à différents moments ($\Delta t$) est décrite en tant que fonction de la course du robinet (h) et lors duquel la caractéristique de puissance thermique (10) est comparée avec une caractéristique de consigne (11), du résultat de la comparaison étant déduit l'état de fonctionnement du radiateur (3) avec le robinet thermostatique de radiateur (6), **caractérisé en ce que** la caractéristique de consigne (11) est décrite par des fonctions enveloppantes ($F_{min}$, $F_{max}$), une première fonction enveloppante ($F_{min}$) décrivant la limite inférieure de la quantité de chaleur ($\Delta Q$) qui doit être restituée en fonction de la course du robinet (h) et une seconde fonction enveloppante ($F_{max}$) décrivant la limite supérieure de la quantité de chaleur ($\Delta Q$) qui doit être restituée et **en ce que** pour chaque point de données ($\Delta Q$, h) qui est décrit par la quantité de chaleur ($\Delta Q$) restituée à une course de robinet (h) déterminée, il est décidé en fonction de la relation

$$F_{min}(h) < \Delta Q(h) < F_{max}(h)$$

   si le point de données ($\Delta Q$, h) se situe à l'intérieur ou à l'extérieur de la caractéristique de consigne (11).

2. Procédé selon la revendication 1, **caractérisé en ce que** la caractéristique de consigne est déduite d'une plage de point de fonctionnement pour le radiateur (3).

3. Procédé selon la revendication 2, **caractérisé en ce que** la plage de points de fonctionnement est définie par des points de fonctionnement (12) autorisés pour le radiateur (3) qui sont **caractérisés par** une pression différentielle de consigne ($\Delta p$) prédéfinie via le robinet thermostatique de radiateur (6) pour un robinet thermostatique de radiateur entièrement ouvert.

4. Procédé selon la revendication 2, **caractérisé en ce que** la plage de points de fonctionnement est définie par des points de fonctionnement (12) autorisés pour le radiateur (3), qui sont prédéfinis par un débit volumétrique de consigne ou débit massique de consigne prédéfini à travers le robinet thermostatique de radiateur.

5. Procédé selon l'une quelconque des revendications précédentes, **caractérisé en ce qu'**il est utilisé un répartiteur de coûts de chauffage (7) et une régulation thermique (5) affectée au radiateur (3) pour la détection de la quantité de chaleur ($\Delta Q$) restituée et de la course du robinet (h).

6. Procédé selon la revendication 5, **caractérisé en ce que** le répartiteur de coûts de chauffage (7) transmet la quantité de chaleur ($\Delta Q$) restituée à une unité de calcul/d'évaluation (8) pour la réalisation du procédé.

7. Procédé selon l'une quelconque des revendications 5 ou 6, **caractérisé en ce que** la régulation de la température ambiante (5) transmet la course du robinet (*h*) à une unité de calcul/d'évaluation pour la réalisation du procédé.

8. Procédé selon l'une quelconque des revendications 5 à 7, **caractérisé en ce que** la transmission de la quantité de chaleur ($\Delta Q$) restituée et de la course du robinet (h) à l'unité de calcul/d'évaluation (8) s'effectue via une communication sans fil synchrone.

9. Procédé selon l'une quelconque des revendications 5 à 8, **caractérisé en ce qu'**en tant qu'unité de calcul/d'évaluation (8) pour la réalisation du procédé, on utilise l'unité de calcul (8) du répartiteur de coûts de chauffages ou de la régulation thermique ou un dispositif séparé.

10. Dispositif, destiné à déterminer l'état de fonctionnement d'un radiateur (3) avec un robinet thermostatique de radiateur (6) et avec une unité de calcul (8), laquelle est agencée pour réceptionner les grandeurs de mesure : course du robinet (h) et quantité de chaleur ($\Delta Q$) restituée par le radiateur, détectées sur un radiateur (3) avec un robinet thermostatique de radiateur (6), **caractérisé en ce que** l'unité de calcul (8) est agencée pour réaliser le procédé selon l'une quelconque des revendications 1 à 9.

11. Dispositif selon la revendication 10, **caractérisé en ce que** le dispositif est un répartiteur de coûts de chauffage (7) ou une régulation de la température ambiante (5) ou un collecteur de données.

Fig.1

Fig.2

Fig.3

Fig.4

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1936288 A2
- EP 1645928 A1

- EP 2420748 A2